(19) **Europäisches Patentamt / European Patent Office / Office européen des brevets**

(11) **EP 2 366 731 B1**

(12) **EUROPEAN PATENT SPECIFICATION**

(45) Date of publication and mention of the grant of the patent:
**07.12.2022 Bulletin 2022/49**

(21) Application number: **11158649.1**

(22) Date of filing: **17.03.2011**

(51) International Patent Classification (IPC):
**C08K 3/00** $^{(2018.01)}$    **C08K 3/34** $^{(2006.01)}$
**C08K 3/36** $^{(2006.01)}$    **C08K 7/00** $^{(2006.01)}$
**C08L 33/06** $^{(2006.01)}$

(52) Cooperative Patent Classification (CPC):
(C-Sets available)
**C08L 33/06**                                              (Cont.)

(54) **A process for preparing a composite material and composite material obtained.**

VERFAHREN ZUR HERSTELLUNG EINES KOMPOSITMATERIALS UND DRAUS ERHALTENER VERBUNDWERKSTOFF

PROCEDE DE PREPARATION D'UN MATERIAU COMPOSITE ET MATÉRIAU COMPOSITE OBTENU À &#xA;        PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2010 IT BO20100169**

(43) Date of publication of application:
**21.09.2011 Bulletin 2011/38**

(73) Proprietor: **DELTA s.r.l.**
**62010 Montecassiano (IT)**

(72) Inventor: **Guzzini, Mauro**
**62019 RECANATI (IT)**

(74) Representative: **Bergadano, Mirko et al**
**Studio Torta S.p.A.**
**Via Viotti, 9**
**10121 Torino (IT)**

(56) References cited:
**EP-A1- 1 114 716          WO-A1-93/11183**
**WO-A2-2008/077903     GB-A- 1 132 261**
**GB-A- 1 195 091          JP-A- 2000 191 317**

(52) Cooperative Patent Classification (CPC): (Cont.)

C-Sets
**C08L 33/06, C08L 2666/02**

## Description

The present invention relates to a process for preparing a composite material and a composite material.

Although known manufactured products present good technical features, they meet only part of the current market needs. In particular, these manufactured products have an appearance, a tactile quality and physic-mechanical characteristics not always completely satisfactory for all uses and requirements of the most demanding consumers.

The patent EP1114716B1 describes manufactured products in composite material and a process for their preparation. The process described herein requires the use of additives for allowing proper molding of the manufactured products.

The aim of the present invention is to provide a process for preparing a composite material and a composite material that allow to overcome, at least partially, the disadvantages of the known art and are, at the same time, easily and economically produced.

According to the present invention, a process for preparing a composite material and a composite material are provided as cited in the independent claims below, and, preferably, in any of the claims which depend directly or indirectly from the independent claims.

The invention is described below with reference to the attached drawing, which shows a non-limiting example of actuation, in which:

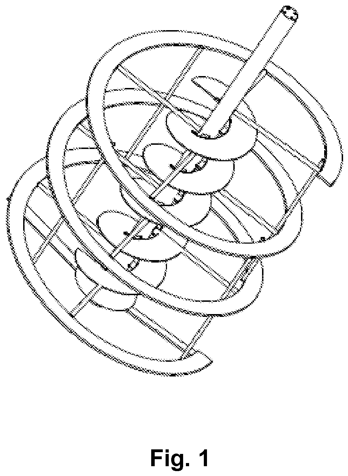

Figure 1 illustrates a stirrer usable in a method in accordance with the present invention.

According to a first aspect of the present invention a process for preparing a composite material is provided.

The process comprises a mixing step, during which a composition is mixed. The composition comprises from about 2 wt% to about 10 wt% of first inorganic particles, which have a size smaller than about 0.1 mm and comprise (in particular, consist of) a material selected from the group consisting of: silica, silicate, wherein the first particles do not have a spheroidal shape;

from 10 wt% to 30 wt% of an organic resin having a viscosity from 40 cps to 600 cps; from about 30 wt% to about 75 wt% of second inorganic particles, which have a size from about 0.1 mm to about 2 mm and are as defined in claim 1; from about 3.25 wt% to about 42 wt% of third inorganic particles, which have a spheroidal shape and a size smaller than about 0.3 mm and are as defined in claim 1; from about 0.08 wt% to about 1 wt% of at least one silane having at least one vinyl moiety; and from about 1 wt% to about 6 wt% of at least one crosslinker; the sum of the weights of the first, second and third particles representing from about 65 wt% to about 85 wt% of the composition.

In the present text, unless explicitly stated otherwise, percentages by weight refer to the overall weight of the composition or composite material. For example, by stating that the composition comprises a percentage by weight of a particular component, it is intended that this percentage by weight is calculated with respect to the overall weight of the composition. Similarly, by stating that the composite material comprises a percentage by weight of a particular component, it is intended that this percentage by weight is calculated with respect to the overall weight of the composite material.

Advantageously, and unless explicitly stated otherwise, viscosity measurements are performed with a controlled rate rheometer, in particular with a Brookfield ® digital rheometer model DV-III RV following the standard instructions of its manual. The viscosity is measured at standard conditions (i.e. at room temperature -25°C - and a pressure of 1 atm).

Above 0.05 mm, the size of the inorganic particles means the diameter of such particles, which diameter is obtained by successive sieving with decreasing sieve hole sizes down to 0.05 mm. Below 0.05 mm, the size of the inorganic particles means the mean diameter of such particles, obtained in accordance with DIN 50049 / EN 10204 by measuring the specific surface area BET. In particular, the average diameter of the particles is calculated on the basis of the specific surface area BET (measured for example with a Micrometrics Tristar 3000 instrument) and a density (g/cm$^3$). More specifically, the average diameter is calculated using the equation:

$$d = \frac{6000}{AS \times \rho}$$

where d is the diameter in nm, AS is the surface area in m$^2$/g, $\rho$ is the density in g/cm$^3$ (Song-Yuan Chang, Lei Liu, Sanford A. Asher, J. Am. Chem. Soc 1994, 116, 6745-6747; Zhijian Wu et al., Journal of Colloid and Interface Science, 304 (2006) 119-124) .

To assess whether the particles have a spheroidal shape the greater diameter of a sample of fifty particles is measured by a scanning electron microscope with a graduated scale. It is estimated, therefore, the average greater diameter of these particles and this is compared with the average diameter calculated as described above (using the specific surface area BET). If the difference between the two average diameters is less than 15% (advantageously 10%) of the average greater diameter, particles shall be considered as spheroidal. On the contrary, if the difference between the two average diameters is greater than 15% (preferably 10%) of the average greater diameter, particles shall be considered as non-spheroidal.

The first and third particles are distinct entities. In other words, the amount (percentage by weight) of the first particles is not (and cannot be) considered as the amount (percentage by weight) of the third particles, and vice versa. The sum of the weights of the first and third particles is (therefore) in all cases from 5.25 wt% to 52 wt% of the composition. In other words, the sum of the weights of the first and third particles is (always) at least 5.25 wt% of the composition.

In the present invention, the first particles do not have a spheroidal shape.

The process also includes a step of hardening (polymerisation), during which the organic resin hardens by reacting with the crosslinking agent resulting in the composite material. In particular, the organic resin polymerizes with the crosslinker.

In particular, the polymerisation step takes place after the composition is inserted into a mold.

According to certain embodiments, portions of inorganic particles are combined with the organic resin in successive moments. In these cases, aliquots of silane are combined with the organic resin at successive moments correspondingly to the particle portions. Each aliquot of silane is able to at least partially silanise the relative portion of particles. In this regard, it is important to underline that it has been experimentally observed that the silanisation capacity of silane has a limited duration (in particular, about twenty-four hours). Therefore, if the inorganic particles are added at different moments it is advantageous to add at different moments the corresponding amounts of silane, so that the silane can react.

It has been also experimentally observed that excessive amounts (higher than those needed to cover the surfaces of the inorganic particles) of silane increased the fragility of the composite material. Therefore, advantageously, the amount of silane is selected so that it can cover the surface of inorganic particles without however exceeding said aim.

According to certain embodiments, a first mixture is prepared by mixing, which includes the first particles, the organic resin and silane from 0.06 wt% to 0.15 wt% with respect to the overall weight of the first mixture. Subsequently, the first mixture, further silane, the second and third particles are combined together for obtaining said composition.

Advantageously, the composition includes at least 5 wt% of the first inorganic particles.

Note that it is experimentally observed that if the percentage by weight of the first particles is too low, compositions are obtained (which in reality are dispersions) being scarcely homogeneous and difficult to mould; if the percentage by weight of the first particles is too high, the composite material surface tends to be too glossy and the color tends to be monochromatic with less than optimal aesthetic results.

Advantageously, the first particles have a size of at least 0.01 mm.

According to certain embodiments, the first inorganic particles comprise a material chosen from the group consisting of: cristobalite and wollastonite. In particular, the first inorganic particles are of a material chosen from the group consisting of: cristobalite and wollastonite.

According to certain embodiments, the first inorganic particles comprise silica. In particular, the first inorganic particles are of a siliceous material (silica).

According to certain embodiments, the organic resin is an acrylic resin, in particular a methacrylic resin.

Note that the viscosity of the resin identified above, allows improving the dispersion of inorganic particles within the resin itself. In this regard, it is to be underlined that insufficient viscosity causes uncontrollable decantation of the dispersion of the composition; high viscosity causes spotted or shiny surfaces on the manufactured product and compositions that tend to incorporate air.

According to certain embodiments, the resin comprises (in particular, consists of) at least one polymerisable organic monomer and at least one organic polymer. Advantageously, the composition consists of from 7 wt% to 37 wt% of the polymerisable organic monomer and from 2 wt% to 10 wt% of the organic polymer.

Advantageously, the composition comprises a percentage by weight of the polymerisable organic monomer less than about 24 wt%. According to certain embodiments, the composition comprises a percentage by weight of the polymerisable organic monomer greater than about 12 wt%.

According to certain embodiments, the polymerisable organic monomer comprises at least one acrylic monomer. In particular, the organic monomer is at least one acrylic monomer. More specifically, the organic monomer is an acrylic monomer. In other words, in these cases, the composition comprises from about 7 wt% to about 37 wt% of an acrylic monomer.

The acrylic monomer is selected from alkyl esters of acrylic or methacrylic acid, where alkyl has from one to six carbon atoms.

In particular, the acrylic monomer is chosen from the group consisting of: methyl methacrylate (MMA), ethyl methacrylate, propyl methacrylate, butyl methacrylate, methyl acrylate, butyl acrylate. The composition may also comprise more than one type of acrylic monomers (for example, the composition may contain both MMA and ethyl methacrylate) in which case, the above percentages by weight of acrylic monomer with respect to the composition refer to the sum of the quantities of the different types of acrylic monomers.

Furthermore, in addition to the acrylic monomer/s, further polymerisable organic monomers may also be used, such as vinyl monomers like, for example, styrene, alpha-methyl styrene, acrylonitrile (see in this respect GB 1493393). In this case, the above percentages by weight of acrylic monomer with respect to the composition refer to the sum of the quantities of the acrylic monomer/s and of further monomers. The percentage by weight of vinyl monomers with respect to the overall weight of the acrylic monomer is, advantageously, less than 50 wt%.

According to certain embodiments, the polymerisable organic monomer includes at least one methacrylic monomer. In particular, the organic monomer is at least one methacrylic monomer. More specifically, the organic monomer is a methacrylic monomer. In other words, in these cases, the composition comprises from about 7 wt% to about 37 wt% of a methacrylic monomer.

The methacrylic monomer is selected from alkyl esters of methacrylic acid, where alkyl has from one to six carbon atoms.

In particular, the methacrylic monomer is selected from the group consisting of: methyl methacrylate (MMA), ethyl methacrylate, propyl methacrylate, butyl methacrylate. The composition may also comprise more than one type of methacrylic monomers (for example, the composition may contain both ethyl methacrylate and MMA), in this case, the above percentages by weight of polymerisable organic monomer with respect to the composition refer to the sum of the quantities of the different types of methacrylic monomers.

According to specific embodiments, the polymerisable organic monomer is MMA.

Advantageously, the composition comprises a percentage by weight of organic polymer less than about 6 wt%. According to certain embodiments, the composition comprises a percentage by weight of organic polymer greater than about 3 wt%.

According to certain embodiments, the organic polymer has a molecular weight ($PM_W$) from $100 \times 10^3$ to $150 \times 10^3$.

According to certain embodiments, the organic polymer comprises (in particular, is) an acrylic polymer.

In the present text, acrylic polymer refers to a polymer obtained by polymerisation of at least one acrylic monomer as defined above. In particular, acrylic polymer refers to a polymer obtained by polymerisation of an acrylic monomer as defined above.

According to certain embodiments, the acrylic polymer is selected from the group consisting of: poly methyl methacrylate, poly ethyl methacrylate, methyl methacrylate-methyl acrylate copolymers, methyl methacrylate-styrene copolymers, methyl methacrylate-butyl acrylate copolymers, methyl methacrylate-methacryloxy propyl trimethoxy silane copolymers.

According to certain embodiments, the organic polymer comprises (in particular, is) a methacrylic polymer.

In the present text, methacrylic polymer refers to a polymer obtained by polymerisation of at least one methacrylic monomer as defined above. In particular, methacrylic polymer refers to a polymer obtained by polymerisation of at least one methacrylic monomer as defined above.

According to certain embodiments, the organic polymer is poly methyl methacrylate.

Advantageously, the composition comprises at least 43 wt% of the second inorganic particles.

Note that the second inorganic particles give hardness and resistance to the manufactured products, an excessive percentage by weight leads to compositions, which are scarcely homogeneous and tend to incorporate air.

The second inorganic particles are a siliceous material selected from the group consisting of; quartz, fused silica, milled glass. In particular, the second inorganic particles comprise (in particular, are) quartz. More specifically, the second inorganic particles comprise (in particular, are) alluvial or milled quartz.

Advantageously, the composition comprises at least 20 wt% of the third inorganic particles. According to certain embodiments, the composition comprises a percentage by weight of the third inorganic particles less than 30 wt%.

Note that the third inorganic particles improve homogeneity of the composition (which in reality is a dispersion), surprisingly allow to increase the concentration of inorganic particles and give the composite a soft satin surface to the touch. In addition, the third inorganic particles contribute, together with the silane, to increase the hardness of the surfaces.

Advantageously, the third inorganic particles have dimensions of at least 0.01 mm. According to certain embodiments, at least one third of the third inorganic particles is smaller than 0.05 mm.

In the present invention the third inorganic particles are made of glass.

According to certain embodiments, the composition comprises from 0.1 wt% to 0.5 wt% of silane.

Note that, as already stated in part, a low percentage by weight of silane causes a shortage of bonds between the resin and the inorganic particles and therefore low physic-mechanical characteristics (the surface will dent easily and resistance to fading will drastically decrease), high amounts cause embrittlement of the composite material.

According to certain embodiments, the silane compound has at least one acrylic residue. In particular, the silane is an acryloxy trialcoxy silane. More specifically, the silane has the following structure,

$$A\text{-}Si\text{-}(OR)_3$$

where A represents an acrylic residue and R represents, each independently from the others, an alkyl, in particular a

$C_1$-$C_3$ alkyl.

In the present text, unless specified otherwise, acrylic residue refers to a molecular portion comprising an acrylic or methacrylic group.

According to certain embodiments, the acrylic residue is selected from the group consisting of: methyl methacrylic, ethyl methacrilic, propyl methacrilic, butyl methacrylic, methyl acrylic, butyl acrylic. Advantageously, the acrylic residue is a methyl methacrylic group.

Unless the contrary is explicitly stated in the present text "Cx-Cy" refers to a group that is intended as a group presenting from x to y carbon atoms.

According to certain embodiments, A represents a methacrylic group. Advantageously, each R is methyl.

In particular, the methacrylic group is selected from the group consisting of: methyl methacrylic, ethyl methacrilic, propyl methacrilic, butyl methacrylic.

Advantageously, the silane is a 3-methacryloxytrimethoxysilane (MEMO). According to specific embodiments, the silane is A174 (distributed by Dynasylan MEMO) trimethoxysilyl-propyl methacrylate.

According to certain embodiments, the composition comprises from 2 wt% to 4 wt% of the crosslinker.

Note that small amounts of the crosslinker cause glossy surfaces with low resistance, high percentages cause cracking. According to certain embodiments, the crosslinker has at least two acrylic residues. In particular, the crosslinker presents at least two methacrylic groups.

According to certain embodiments, the crosslinker comprises at least one crosslinker with two vinyl moieties, in particular, methacrylic groups, and a crosslinker with three vinyl moieties, in particular methacrylic groups. Advantageously, the composition comprises from 0.5 wt% to 3 wt% of the crosslinker with two vinyl moieties, and at least 0.5 wt% to 3 wt% of the crosslinker with three vinyl moieties. In particular, the composition comprises from 0.5 wt% to 3 wt% of a crosslinker with two aryl residues, and at least 0.5 wt% to 3 wt% of a crosslinker with three aryl residues. More specifically, the composition comprises from 0.5 wt% to 3 wt% of the crosslinker with two methacrylic groups; and at least 0.5 wt% to 3 wt% of the crosslinker with three methacrylic groups.

According to certain embodiments, the crosslinker is selected from the group consisting of: ethylene glycol methacrylate (EGDM), triethylene glycol dimethacrylate (TEGDM), trimethylolpropane trimethacrylate (TMPTM), and mixtures thereof.

According to certain embodiments, the composition comprises a silanisation catalyst, which, in particular, is part of the first mixture.

The silanisation catalyst is selected from the group consisting of: methanol, isopropylamine, methacrylic acid and mixtures thereof.

Advantageously, the silanisation catalyst comprises methanol. In particular, the silanisation catalyst is methanol.

Advantageously, the silanisation catalyst comprises isopropylamine. In particular, the silanisation catalyst is isopropylamine.

According to certain embodiments, the step of polymerisation envisages the addition of a polymerisation initiator to the composition.

Advantageously, the initiator comprises (in particular, is) an additive selected from the group consisting of: lauryl peroxide, myristyl peroxydicarbonate, TBPEH (terbutyl-peroxy-2-ethylhexanoate), R913, bis (-terbutyl cyclohexyl) - peroxyocarbonate, and mixtures thereof. According to specific embodiments, the catalyst comprises (in particular, is) an additive selected from the group consisting of: lauryl peroxide, myristyl peroxy dicarbonate, bis (-terbutyl cyclohexyl)-peroxycarbonate and mixtures thereof.

According to specific embodiments, the catalyst is bis (-terbutyl cyclohexyl)-peroxycarbonate.

Advantageously, the composition comprises a release agent. According to certain embodiments, the release agent is selected from the group consisting of: zinc stearate, stearic acid, sodium dioctylsulphosuccinate or mixtures thereof. In particular, the release agent is zinc stearate.

Advantageously, completely absent in the composition are wetting, anti-bubble and/or thixotropic additives. According to certain embodiments the wetting, anti-bubble and/or thixotropic additives are: BYK W 969, BYK A 515, BYK 410 (all by BYK Chemie®).

According to a second aspect of the present invention, a composite material obtained by a process according to the first aspect of present invention is provided.

According to a third aspect of the present invention, a composite material obtainable by a process according to the first aspect of the present invention is provided.

According to a fourth aspect of the present invention (dependent or independent from the second and/or third aspect) a composite material is provided comprising from 2 wt% to 10 wt% of first inorganic particles, which have a size smaller than 0.1 mm and comprise a material selected from the group consisting of: silica, silicate, from 10 wt% to 30 wt% of a polymer matrix, from 30 wt% to 75 wt% of second inorganic particles, which have a size from 0.1 mm to 2 mm and comprise silica, and from 3.25 wt% to 42 wt% of third inorganic particles, which include silica and have a spheroidal shape and a size smaller than 0.3 mm. The second and third inorganic particles are at least partially bound to the polymer matrix by means of covalent bonds. The sum of the weights of the first, second and third particles representing from 65 wt% to 85 wt% of the composite material.

The first, second and third inorganic particles are defined, independently of each other, as indicated above in accordance with the first aspect of the present invention.

According to certain embodiments, the composite material comprises percentages by weight of the first, second and third inorganic particles identical to those listed above for the composition with reference to the first aspect of the present invention.

Advantageously, the first inorganic particles are at least partially bound to the polymer matrix by covalent bonds.

In particular, the polymer matrix is bound to the first, second and third inorganic particles by Si-O-Si bonds.

According to certain embodiments, the polymer matrix includes (in particular, is) an acrylic polymer.

According to certain embodiments, the polymer matrix comprises a methacrylic polymer. In particular, the polymer matrix is a methacrylic polymer. More specifically, the polymer matrix is of polymethylmethacrylate.

Advantageously, the polymer matrix is at least partially crosslinked.

According to a further aspect of the present invention a manufactured product comprising the mentioned composite material (defined in accordance with the fourth aspect of the present invention) is provided. Examples of manufactured products comprising the mentioned material are: kitchen sinks, bathroom sinks, washbasins for public places, bathroom work tops, kitchen work tops, counter tops, thermoformed flat slabs, walls, ceilings, bathtubs, bathroom accessories, shower basins, shower walls and shower stalls.

According to a further aspect of the present invention a composition as defined above is provided.

Importantly to be noted is that the subject of the present invention presents the following advantages with respect to the state of the art:

- reduction of viscosity (of the composition), with equal solid content in the dispersion (about 70%), from about 9000 cps to 5000 cps;
- possibility for increasing the content of inert filler;
- possible elimination of all wetting and antibubble additives;
- possible elimination of thixotropic additives, being particularly surprising that by adding a particular filler, such as glass spheres, which do not have thixotropic properties, the total elimination of these additives is obtained, with significant benefits on the process, the stability of the dispersion and the cost (see specific examples).

Additional features of the present invention will be clear from the following description of certain merely illustrative and non restrictive examples.

**Example 1**

Preparation of a neutral intermediate (first mixture)

This preparation can be carried out according to specific needs by working with a wide range of quantities. In an example of actuation the preparation has followed the indications of the patent EP1114716B1 and, in particular, has followed the procedure given below.

In a 1000cc container of high density polyethylene using a Velp rod stirrer with a Cowles impeller (600-1000 rpm) were mixed:

- 570 grams of high purity methyl methacrylate
- 150 grams of methyl methacrylate pearls $PM_w$ = 100 - 150 $10^3$; diameter = 100-200 microns

The mixture was stirred until complete dissolution of the pearls.

Then were further added:

- 28 grams of crosslinking agents EGDM - TEGDM - TMPTM;
- 1 gram of silane A174 trimethoxysilyl - propylmethacrylate;
- 250 grams of cristobalite B0012 Sihelco®.

As catalysts of silanisation variable amounts of mixtures of methacrylic acid and isopropylamine from 0.7 to 1.2 grams were used.

**Example 2**

Laboratory preparation of a composite material

In a 1000cc container of high density polyethylene by using a Velp rod stirrer with a blade impeller (600-1000 rpm) were mixed:

- 308.5 grams of neutral of example 1;
- 480 grams of quartz from Lucchi Granulati® (Verona);
- 69 grams of solid glass micro-spheres with a particle size of 0-50 microns from Elettrochimica Vallestaffora ® (Rivanazzano PV);
- 138 grams of solid glass micro-spheres with a particle size of 63-212 microns from Elettrochimica Vallestaffora (Rivanazzano PV);
- 1.5 grams of color paste;
- 1.5 grams of silane A174 trimethoxysilyl - propylmethacrylate.

The mixture was dispersed vigorously by the use of the rod stirrer adding 5 grams of bis(4-terbutylciclohexyl)-peroxydicarbonate and 2.5 grams of stearic acid.

The mixture was placed between two sheets of nickel-plated steel, closed by a gasket of plasticized PVC in order to obtain a composite sheet on which to carry out characterization. The curing of the sheet was obtained by heating the mold in hot a bath at 65° C for 40 minutes.

From the mold, properly cooled, a sheet was obtained that has the characteristics shown in Tables 1-4. The tables also indicate the measurement methods used with regard to the relative UNI standards.

Table 1

| Rockwell Hardness HRM UNI EN ISO 2039-2:2001 | Charpy KJ/m$^2$ UNI EN ISO 179-01:2002 | Modules of elasticity in bending (MPa) UNI EN ISO 178 | Flexural strength (MPa) UNI EN ISO 178 |
|---|---|---|---|
| 109 | 3.9 | 11,570 | 83 |

Table 2

| Scratch resistance scratch depth at 20 N ($\mu$m) UNI EN 13310:2004 | Taber Abrasion UNI ISO 9352:1999 | Thermal Shock UNI EN 13310:2004 |
|---|---|---|
| 139 | 78 | 1000 cycles ok Delta E=2,5 |

Table 3

| SURFACE RESISTANCE TO DETERGENTS FOR DOMESTIC USE UNI EN 14527:2006 | | |
|---|---|---|
| | **Assessment and Compliance** | |
| *Product* | *After rinsing with water* | *water Cleaning with sponge* |
| 1. Lisoform Bagno Gel | C | C |
| 2. Viakal | C | C |
| 3. Cif crema | C | C |
| 4, Bleaching solution | C | C |
| 5. Ammonia | C | C |
| 6. Alcohol | C | C |
| 7. Multi Purpose (Glassex) | C | C |

Tabella 4

| | | Assessment and Compliance | | |
|---|---|---|---|---|
| SURFACES RESISTANCE TO CHEMICAL SUBSTANCES AND STAINING AGENTS | | | | |
| UNI EN 13310:2004 | | | | |
| Family | Product | After rinsing with water | Cleaning with water with sponge | Cleaning with allumina 12-h with sponge |
| Acids | 1. Acetic acid ($CH_3COOH$), 10% V/V | C | C | C |
| Alkali | 2. Caustic soda (NaOH), 5% m/m | C | C | C |
| Alcohol | 3. Ethanol ($C_2H_5OH$), 70% V/V | C | C | C |
| Bleaching agents | 4. Sodium hypochlorite (NaOCl), 5% active chlorine ($Cl_2$) | C | C | C |
| Dyes | 5. Methylene blue, 1% m/m | C | C | C |
| Salts | 6. Sodium chloride (NaCl), 170 g/l, diluted to 50 % | C | C | C |

In Tables 3 and 4, C indicates conform and ND indicates not conform.

As can be noted from the above tables, the material surprisingly resists all agents.

**Example 3**

Preparation of a neutral intermediate (first mixture)

In a 8 mc reactor of stainless steel fitted with a blade stirrer (80-200 rpm) are loaded:

- 2850 kg of high purity methyl methacrylate;
- 750 kg of methyl methacrylate pearls $PM_w$ = 100 - 150 $10^3$; diameter = 100 - 200 microns.

The mixture was stirred until complete dissolution of the pearls.

Then are further added:

- 138 kg of crosslinking agents such as EGDM - TEGDM - TMPTM;
- 5 kg of silane A174 trimethoxysilyl - propylmethacrylate;
- 1250 kg of cristobalite B0012 Sihelco®.

As catalysts of silanisation variable amounts of mixtures of methacrylic acid and isopropylamine from 3.5 to 6 kg were used.

**Example 4**

Industrial preparation of the composite material

In a 1.2 mc cylindrical shaped reactor with a diameter/height ratio of about 1, fitted with a stainless steel stirrer (see Figure 1) (the stirrer operates within a speed range between 5 and 90 rpm) were loaded:

- 493 kg of the neutral mentioned in example 3;
- 772 kg of quartz by Lucchi Granulati® (Verona);
- 110.4 kg of solid glass micro-spheress with a particle size of 0-50 microns by Elettrochimica Vallestaffora® (Rivanazzano PV) ;
- 220.8 kg of solid glass micro-spheres with a particle size of 63-212 microns by Elettrochimica Vallestaffora® (Rivanazzano PV);

- 2.4 kg of color paste;
- 2.4 kg of silane A174 trimethoxysilyl - propylmethacrylate;

The mixture was dispersed with the above indicated reactor that was ready to supply the molding container where the dispersion will be catalised in the mode already described in Example 2, taking into account the different amounts considered.

**Example 5**

Semi-industrial scale tests

In order to expect significant results three sinks were prepared (using 40 kg of material), upon which the various different measurements were repeated, the result of which, reported below, are average values.
It was loaded:

- 12.30 kg of the neutral mentioned in example 3;
- 19.30 kg of quartz by Lucchi Granulati® (Verona);
- 2.76 kg of solid glass micro-spheres with a particle size of 0-50 microns by Elettrochimica Vallestaffora ® (Rivanazzano PV) ;
- 5.52 kg of solid glass micro-spheres with a particle size of 63-212 microns by Elettrochimica Vallestaffora® (Rivanazzano PV) ;
- 60 g of color paste;
- 60 g of silane A174 trimethoxysilyl - propylmethacrylate.

The dispersion was placed in 30-liter cylindrical containers that were rolled for 8 hours for achieving the maximum redispersion of the mixture.
The dispersion thus obtained was poured into the molding container where the dispersion was catalysed in the mode already described in the example 2 above.
From the molding process a sink is obtained with the characteristics indicated in the following tables 5-8. Indicated in the tables are also the measurement methods used with regard to the relevant UNI standards.

Table 5

| Rockwell Hardness HRM UNI EN ISO 2039-2:2001 | Charpy KJ/m$^2$ UNI EN ISO 179-01:2002 | Modulus of elasticity in bending (MPa) UNI EN ISO 178 | Flexural strength (MPa) UNI EN ISO 178 |
|---|---|---|---|
| 113 | 4.5 | 12,450 | 86 |

Table 6

| Scratch resistance scratch depth of 20 N ($\mu$m) UNI EN 13310:2004 | Taber Abrasion UNI ISO 9352: 1999 | Thermal Shock UNI EN 13310:2004 |
|---|---|---|
| 139 | 78 | 1000 cycles ok Delta E=2.5 |

Table 7

| SURFACE RESISTANCE TO DETERGENTS FOR DOMESTIC USE UNI EN 14527:2006 | | |
|---|---|---|
| | Assessment and Compliance | |
| Product | After rinsing with water | Cleaning water with sponge |
| 1. Lisoform Bagno Gel | C | C |
| 2. Viakal | C | C |
| 3. Cif crema | C | C |
| 4. Bleaching solution | C | C |

(continued)

| SURFACE RESISTANCE TO DETERGENTS FOR DOMESTIC USE UNI EN 14527:2006 | | |
|---|---|---|
| | *Assessment and Compliance* | |
| *Product* | *After rinsing with water* | *Cleaning water with sponge* |
| 5. Ammonia | C | C |
| 6. Alcohol | C | C |
| 7. Multi Purpose (Glassex) | C | C |

Table 8

| SURFACE RESISTANCE TO CHEMICAL SUBSTANCES AND STAINING AGENTS UNI EN 13310:2004 | | | | |
|---|---|---|---|---|
| | | *Assessment and Compliance* | | |
| *Family* | *Product* | *After rinsing with water* | *Cleaning with water with sponge* | *Cleaning with allumina 12-h with sponge* |
| *Acids* | *1. Acetic acid (CH$_3$COOH), 10% V/V* | *C* | *C* | *c* |
| *Alkali* | *2. Caustic soda (NaOH), 5% m/m* | *C* | *C* | *C* |
| *Alcohol* | *3. Ethanol (C$_2$H$_5$OH), 70% V/V* | *C* | *C* | *C* |
| *Bleaching agents* | *4. Sodium hypochlorite (NaOCl), 5% active chlorine (Cl$_2$)* | *C* | *c* | *c* |
| *Dyes* | *5. Methylene blue, 1% m/m* | *C* | *C* | *C* |
| *Salts* | *6. Sodium chloride (NaCl), 170 g/l, diluted to 50 %* | *C* | *C* | *C* |

In Tables 7 and 8, C indicates conform and ND indicates not conform. As can easily be seen from the above data the products have surprisingly passed all the tests.

**Example 6**

Tests with additives

In the modes already described in example 5, 4 formulations of 40 kg of dispersion, referred to as formulation A, B, C and D were prepared.

The formulation A is free of any additives and is taken as a reference.

The formulation B, before being molded is charged with a wetting additive (BYK W968 by BYK Altana group) in a percentage of 0.3 wt%. The next step is the molding process as in formulation A.

The formulation C, before being molded is charged with an antibubble additive (BYK A515 by BYK Altana group) in a percentage of 0.3 wt%. The next step is the molding process as in formulation A.

The formulation D, before being molded is charged with a thixotropic additive (BYK 410 by BYK Altana group) in a percentage of 0.2 wt%. The next step is the molding process as in formulation A.

The results of thermal shock tests are shown in Table 9 below.

Table 9

| Formula | Article charactaristics | Thermal Shock (15°C - 90°C) |
|---|---|---|
| A | Homogeneous material with no stains, no holes or cracks, smooth and very compact surface | 1000 cycles ok Bleaching: delta E = 1.5 |

(continued)

| Formula | Article charactaristics | Thermal Shock (15°C - 90°C) |
|---|---|---|
| B | scarcely homogeneous material, streaks on the bath tub walls | at 700 cycles the piece broke |
| C | Same as B | at 800 cycles the piece broke |
| D | scarcely homogeneous material with glossy spots and low sedimentation. Presence of holes | at 600 cycles the piece broke |

From the obtained results, it can be observed that surprisingly the addition of additives not only does not lead to any substantial benefit but rather to a deterioration in material characteristics.

**Example 7**

Comparison of viscosity

7.1 Preparation of intermediate Neutral (first mixture)

In a 1000cc container of high density polyethylene by using a Velp rod stirrer with a Cowles impeller (600-1000 rpm) were mixed:

- 570 grams of high purity methyl methacrylate;
- 150 grams of methyl methacrylate pearls $PM_w$ = 100 - 150 $10^3$ diameter = 100-200 microns.

The mixture was stirredd until complete dissolution of the pearls.

Then are further added:

- 12 grams of fumed silica;
- 14 grams of crosslinking agents EGDM - TEGDM;
- 5 grams of silane A174 trimethoxysilyl - propylmethacrylate;
- 250 grams of cristobalite B0012 Sihelco®.

Silanisation Catalysts were used in various amounts of mixtures of methacrylic acid and isopropylamine from 0.7 to 1.2 grams.

7.2 Preparation of a dispersion (composition) not actuated in accordance with the present invention

In a 1000cc container of high density polyethylene by using a Velp rod stirrer with a blade impeller (600-1000 rpm) were mixed:

- 365 grams of the produced neutral (as in example 7.1 above);
- 617.4 g of quartz from by Lucchi Granulati® (Verona);
- 2 grams of color paste;

The mixture was dispersed vigorously by the use of the rod stirrer by adding:

- 3 grams of BYK W969;
- 3 grams of BYK A515;
- 1 gram of BYK 410.

The viscosity of the dispersion thus obtained was measured with a Brookfield viscometer model DV-III RV. The results are shown in Table 10:

Table 10

| Speed | Torque | Viscosity | Temp. °C |
|---|---|---|---|
| **2** | 5.5 | 11000 | 25 |
| **4** | 9.7 | 9700 | 25 |
| **10** | 19 | 7600 | 25 |
| **20** | 31.3 | 6260 | 25 |

7.3 Preparation of a dispersion (composition) actuated in accordance with the present invention

In a 1000cc container of high density polyethylene by using a Velp rod stirrer with a blade impeller (600-1000 rpm) were mixed:

- 365 grams of neutral as in example 1;
- 432.2 g of quartz by Lucchi Granulati® (Verona);
- 61.7 grams of solid glass micro-spheres with a particle size of 0-50 microns by Elettrochimica Vallestaffora® (Rivanazzano PV) ;
- 123.5 grams of solid glass micro-spheres with a particle size of 63-212 microns by Elettrochimica Vallestaffora ® (Rivanazzano PV);
- 2 grams of color paste;
- 1.5 grams of silane A174 trimethoxysilyl - propylmethacrylate;

The mixture is dispersed vigorously by the use of the rod stirrer.

The viscosity of the dispersion thus obtained was measured with a Brookfield viscometer model DV-III RV. The results are shown in Table 11:

Table 11

| Speed | Torque % | Viscosity | Temp. °C |
|---|---|---|---|
| **2** | 2.5 | 5000 | 25 |
| **4** | 4.7 | 4700 | 25 |
| **10** | 10.4 | 4160 | 25 |
| **20** | 18.9 | 3780 | 25 |

As can be easily seen, the properties of the dispersion mentioned in example 7.3 are surprisingly and significantly better than those of the dispersion of the example 7.2.

**Example 8**

Molding test of a material not in accordance with the present invention

A verification was made on the characteristics of molding a dispersion formulation with increased charge (with percentage of inorganic particles close to that of examples 2 and 4 above). The tests were repeated in order to mold three sinks.

From preliminary tests in the laboratory it was found that increasing the charge for more than 65% the quartz was not wet enough to be managed in production.

It was loaded:

- 14 kg of the neutral as in example 7.1;
- 26 kg of quartz by Lucchi Granulati ® (Verona);
- 80 g of color paste;
- 120 grams of BYK W969;
- 120 grams of BYK A515;
- 40 grams of BYK 410;

EP 2 366 731 B1

The dispersion was placed in 30-liter cylindrical containers that were rolled for 8 hours so as to achieve maximum redispersion of the mixture. The dispersion thus obtained was poured into the molding container where the dispersion was catalysed in the modes already described in Example 2 above.

There were major complications during the injection, the material transited with great difficulty to exit the injection tube. The obtained sinks presented many holes due to trapped air. The three obtained sinks were considered non-recoverable waste.

By comparing actual results with those described in examples 2 and 4, it can be noted that the behavior of the dispersions and the characteristics of the material of the examples 2 and 4 are astonishing improvements.

**Claims**

1. A process for preparing a composite material; the method comprises:

   a mixing step, during which a composition is mixed; the composition comprising from 2 wt% to 10 wt% of first inorganic particles, which have a size smaller than 0.1 mm and comprise a material selected from the group consisting of: silica, silicate; from 10 wt% to 30 wt% of an organic resin having a viscosity from 40 cps to 600 cps; from 30 wt% to 75 wt% of second inorganic particles, which have a size from 0.1 mm to 2 mm and comprise silica; from 3.25 wt% to 42 wt% of third inorganic particles, which have a spheroidal shape and a size smaller than 0.3 mm, wherein the spheroidal shape is defined as disclosed in the description
   from 0.08 wt% to 1 wt% of at least one silane having at least one vinyl moiety; and from 1 wt% to 6 wt% of at least one crosslinker; the sum of the weights of the first and third particles is from 5.25 wt% to 52 wt% of the composition; the sum of the weights of the first, second and third particles forming from 65 wt% to 85 wt% of the composition;
   a polymerising step, during which the organic resin polymerises together with the crosslinker so as to obtain the composite material;
   above 0.05 mm, the size of the inorganic particles means the diameter of such particles, which diameter is obtained by successive sieving with decreasing sieve hole sizes down to 0.05 mm; below 0.05 mm, the size of the inorganic particles means the mean diameter of such particles, obtained in accordance with DIN 50049 / EN 10204 by measuring the specific surface area BET as explained in the description;
   viscosity measurements are performed with a controlled rate rheometer as explained in the description;
   the first particles do not have a spheroidal shape;
   the third inorganic particles have a size of at least 0.01 mm; at least one third of the third inorganic particles have a size smaller than 0.05 mm;
   the third inorganic particles are made of glass;
   the second particles are made of a siliceous material selected from the group consisting of: quartz, fused silica, milled glass.

2. The process according to claim 1, wherein the composition comprises at least 5 wt% of the first inorganic particles and at least 43 wt% of the second inorganic particles.

3. The process according to claim 1 or 2, wherein portions of inorganic particles are combined with the organic resin at subsequent times; aliquots of the silane being combined with the organic resin at subsequent times correspondingly to the portions of particles; each aliquot of silane silanising the corresponding portion of particles at least partially.

4. The process according to one of the preceding claims, wherein a first mixture, which comprises the first particles, the organic resin, and from 0.06 wt% to 0.15 wt%, with respect to the overall weight of the first mixture, of silane, is prepared by mixing; subsequently, the first mixture, additional silane, the second and third particles are combined together so as to obtain said composition.

5. The process according to one of the preceding claims, wherein the cross-linker has at least two acrylic residues; the silane has at least one acrylic residue.

6. The process according to one of the preceding claims, wherein

   the crosslinker comprises at least one crosslinker with two vinyl moieties, in particular two acrylic residues, and a crosslinker with three vinyl moieties, in particular two acrylic residues; the composition comprising from 0.5 wt% to 3 wt% of the crosslinker with two vinyl moieties; and at least 0.5 wt% to 3 wt% of the crosslinker with three vinyl moieties;
the silane is an acryloxy trialcoxy silane having, in particular, the following structure,

$$A\text{-}Si\text{-}(OR)_3$$

wherein A represents an acrylic residue and R each independently represents an alkyl, in particular a $C_1$-$C_3$ alkyl.

7. The process according to one of the preceding claims, wherein the organic resin is a methacrylic resin.

8. The process according to one of the preceding claims, wherein the organic resin consists of at least one polymerisable organic monomer and at least one organic polymer; the composition comprising from 7 wt% to 37 wt% of the polymerisable organic monomer and from 2 wt% to 10 wt% of the organic polymer.

9. The process according to claim 8, wherein the polymerisable organic monomer comprises at least one acrylic monomer; the organic polymer comprises at least one acrylic polymer.

10. The process according to claim 9, wherein the polymerisable organic monomer is a methacrylic monomer; the organic polymer is a methacrylic polymer; the crosslinker has at least two methacrylic groups; the silane has at least one methacrylic group.

11. The process according to claim 10, wherein the polymerisable organic monomer is methyl methacrylate; the organic polymer is polymethyl methacrylate; the crosslinker is selected from the group consisting of: ethylene glycol methacrylate (EGDM), triethylene glycol dimethacrylate (TEGDM), trimethylolpropane trimethacrylate (TMPTM) and mixtures thereof; the silane is a 3-methacryloxytrimethoxysilane.

12. The process according to one of the preceding claims, wherein the composition comprises a silanisation catalyst, which, in particular, is part of the first mixture; the step of polymerisation provides that a polymerisation initiator is added to the composition.

13. The process according to one of the preceding claims, wherein the first inorganic particles are made of a material selected from the group consisting of: cristobalite, wollastonite.

14. The process according to one of the preceding claims, wherein the first inorganic particles comprise silica.

15. The process according to one of the preceding claims, wherein the first inorganic particles have a size of at least 0.01 mm; at least one third of the third particles have a size smaller that 0.05 mm.

16. A composite material comprising from 2 wt% to 10 wt% of first inorganic particles, which have size smaller than 0.1 mm and comprise a material selected from the group consisting of: silica, silicate; from 10 wt% to 30 wt% of a polymer matrix; from 30 wt% to 75 wt% of second inorganic particles, which have a size from 0.1 mm to 2 mm and comprise silica; and from 3.25 wt% to 42 wt% of third inorganic particles, which have a spheroidal shape and a size smaller than 0.3 mm and comprise silica, wherein the spheroidal shape is defined as disclosed in the description;

the second and third inorganic particles being at least partially bound to the polymer matrix by means of covalent bonds; the sum of the weights of the first and third particles is from 5.25 wt% to 52 wt% of the composition; the sum of the weights of the first, second and third particles forming from 65wt% to 85wt% of the composite material; above 0.05 mm, the size of the inorganic particles means the diameter of such particles, which diameter is obtained by successive sieving with decreasing sieve hole sizes down to 0.05 mm; below 0.05 mm, the size of the inorganic particles means the mean diameter of such particles, obtained in accordance with DIN 50049 / EN 10204 by measuring the specific surface area BET as explained in the description;
the first particles do not have a spheroidal shape;
the third inorganic particles have dimensions of at least 0.01 mm; at least one third of the third inorganic particles is smaller than 0.05 mm;
the third inorganic particles are made of glass;
the second particles are made of a siliceous material selected from the group consisting of: quartz, fused silica, milled glass.

17. The composite material according to claim 16, and comprising at least 5 wt% of the first inorganic particles and at least 43 wt% of the second inorganic particles.

18. The composite material according to claim 16 or 17, wherein the first inorganic particles comprise silica and are at least partially bound to the polymer matrix by means of covalent bonds; the polymer matrix comprising an acrylic polymer.

19. The composite material according to one of claims 16 to 18 wherein the polymer matrix consists of an acrylic polymer; the first particles are made of a material selected from the group consisting of: cristobalite, wollastonite.

20. The composite material according to one of claims 16 to 19, wherein the first inorganic particles have a size of at least 0.01 mm; the polymer matrix being partially methacrylic; at least one third of the third particles having a size smaller that 0.05 mm.

21. The material according to one of claim 16 to 20, obtained according to the process of one of claims 1 to 15.

22. A product comprising a material according to one of claims 16 to 21.


**Patentansprüche**

1. Verfahren zur Herstellung eines Verbundmaterials, umfassend:

einen Mischschritt, während dem eine Zusammensetzung gemischt wird, wobei die Zusammensetzung folgendes umfasst:

von 2 Gew.-% bis 10 Gew.-% erste anorganische Partikel, die eine Größe von weniger als 0,1 mm aufweisen und ein Material umfassen, das aus der Gruppe bestehend aus: Siliciumdioxid, Silikat ausgewählt ist;
von 10 Gew.-% bis 30 Gew.-% ein organisches Harz mit einer Viskosität von 40 cps bis 600 cps;
von 30 Gew.-% bis 75 Gew.-% zweite anorganische Partikel, die eine Größe von 0,1 mm bis 2 mm aufweisen und Siliciumdioxid umfassen;
von 3,25 Gew.-% bis 42 Gew.-% dritte anorganische Partikel, die eine kugelige Form und eine Größe von weniger als 0,3 mm aufweisen, wobei die kugelige Form, wie in der Beschreibung offenbart, definiert ist;
von 0,08 Gew.-% bis 1 Gew.-% mindestens eines Silans mit mindestens einem Vinylrest; und
von 1 Gew.-% bis 6 Gew.-% mindestens eines Vernetzers;
wobei die Summe der Gewichte der ersten und dritten Partikel von 5,25 Gew.-% bis 52 Gew.-% der Zusammensetzung beträgt; und
wobei die Summe der Gewichte der ersten, zweiten und dritten Partikel von 65 Gew.-% bis 85 Gew.-% der Zusammensetzung beträgt; und

einen Polymerisationsschritt, während dem das organische Harz zusammen mit dem Vernetzer polymerisiert, um das Verbundmaterial zu erhalten;
wobei über 0,05 mm die Größe der anorganischen Partikel den Durchmesser solcher Partikel bedeutet und der Durchmesser durch aufeinanderfolgendes Sieben mit abnehmenden Sieblochgrößen bis hinunter zu 0,05 mm erhalten wird;
wobei unter 0,05 mm die Größe der anorganischen Partikel den mittleren Durchmesser solcher Partikel bedeutet und gemäß DIN 50049 / EN 10204 durch Messen der spezifischen Oberfläche BET, wie in der Beschreibung erläutert, erhalten wird;
wobei Viskositätsmessungen mit einem Rheometer mit kontrollierter Rate, wie in der Beschreibung erläutert, durchgeführt werden;
wobei die ersten Partikel keine kugelige Form aufweisen;
wobei die dritten anorganischen Partikel eine Größe von mindestens 0,01 mm aufweisen und mindestens ein Drittel der dritten anorganischen Partikel eine Größe von weniger als 0,05 mm aufweist;
wobei die dritten anorganischen Partikel aus Glas hergestellt sind;
wobei die zweiten Partikel aus einem silikatischen Material hergestellt sind, das aus der Gruppe bestehend aus: Quarz, Quarzglas, gemahlenem Glas ausgewählt ist.

2. Verfahren nach Anspruch 1,
wobei die Zusammensetzung mindestens 5 Gew.-% der ersten anorganischen Partikel und mindestens 43 Gew.-

% der zweiten anorganischen Partikel umfasst.

3. Verfahren nach Anspruch 1 oder 2,

wobei Teile von anorganischen Partikeln zu aufeinanderfolgenden Zeiten mit dem organischen Harz kombiniert werden;
wobei Teilproben des Silans entsprechend den Anteilen von Partikeln aufeinanderfolgend mit dem organischen Harz kombiniert werden; und
wobei jede Teilprobe des Silans den entsprechenden Anteil von Partikeln zumindest teilweise silanisiert.

4. Verfahren nach einem der vorhergehenden Ansprüche,

wobei eine erste Mischung, die die ersten Partikel, das organische Harz und von 0,06 Gew.-% bis 0,15 Gew.-%, bezogen auf das Gesamtgewicht der ersten Mischung, Silan umfasst, durch Mischen hergestellt wird; und
wobei anschließend die erste Mischung, zusätzliches Silan, die zweiten und dritten Partikel miteinander kombiniert werden, um so besagte Zusammensetzung zu erhalten.

5. Verfahren nach einem der vorhergehenden Ansprüche,

wobei der Vernetzer mindestens zwei Acrylreste aufweist; und
wobei das Silan mindestens einen Acrylrest aufweist.

6. Verfahren nach einem der vorhergehenden Ansprüche,

wobei der Vernetzer mindestens einen Vernetzer mit zwei Vinylresten, insbesondere zwei Acrylresten, und einen Vernetzer mit drei Vinylresten, insbesondere zwei Acrylresten, umfasst;
wobei die Zusammensetzung von 0,5 Gew.-% bis 3 Gew.-% des Vernetzers mit zwei Vinylresten; und mindestens 0,5 Gew.-% bis 3 Gew.-% des Vernetzers mit drei Vinylresten umfasst;
wobei das Silan ein Acryloxytrialkoxysilan mit insbesondere der folgenden Struktur A-Si-(OR)$_3$ ist, wobei A einen Acrylrest darstellt und R jeweils unabhängig ein Alkyl, insbesondere ein $C_1$-$C_3$-Alkyl, darstellt.

7. Verfahren nach einem der vorhergehenden Ansprüche,
wobei das organische Harz ein Methacrylharz ist.

8. Verfahren nach einem der vorhergehenden Ansprüche,

wobei das organische Harz aus mindestens einem polymerisierbaren organischen Monomer und mindestens einem organischen Polymer besteht; und
wobei die Zusammensetzung von 7 Gew.-% bis 37 Gew.-% des polymerisierbaren organischen Monomers und von 2 Gew.-% bis 10 Gew.-% des organischen Polymers umfasst.

9. Verfahren nach Anspruch 8,

wobei das polymerisierbare organische Monomer mindestens ein Acrylmonomer umfasst; und
wobei das organische Polymer mindestens ein Acrylpolymer umfasst.

10. Verfahren nach Anspruch 9,

wobei das polymerisierbare organische Monomer ein Methacrylmonomer ist;
wobei das organische Polymer ein Methacrylpolymer ist;
wobei der Vernetzer mindestens zwei Methacrylgruppen aufweist; und
wobei das Silan mindestens eine Methacrylgruppe aufweist.

11. Verfahren nach Anspruch 10,

wobei das polymerisierbare organische Monomer Methylmethacrylat ist;
wobei das organische Polymer Polymethylmethacrylat ist;
wobei der Vernetzer aus der Gruppe bestehend aus: Ethylenglykolmethacrylat (EGDM), Triethylenglykoldimethacrylat (TEGDM), Trimethylolpropantrimethacrylat (TMPTM) und Mischungen davon ausgewählt ist; und wobei das Silan ein 3-Methacryloxytrimethoxysilan ist.

12. Verfahren nach einem der vorhergehenden Ansprüche,

wobei die Zusammensetzung einen Silanisierungskatalysator umfasst, der insbesondere Teil der ersten Mischung ist; und

wobei der Schritt des Polymerisierens vorsieht, dass ein Polymerisationsinitiator zu der Zusammensetzung gegeben wird.

13. Verfahren nach einem der vorhergehenden Ansprüche, wobei die ersten anorganischen Partikel aus einem Material hergestellt sind, das aus der Gruppe bestehend aus: Cristobalit, Wollastonit ausgewählt ist.

14. Verfahren nach einem der vorhergehenden Ansprüche, wobei die ersten anorganischen Partikel Siliciumdioxid umfassen.

15. Verfahren nach einem der vorhergehenden Ansprüche,

wobei die ersten anorganischen Partikel eine Größe von mindestens 0,01 mm aufweisen; und wobei mindestens ein Drittel der dritten Partikel eine Größe von weniger als 0,05 mm aufweist.

16. Verbundmaterial, umfassend:

von 2 Gew.-% bis 10 Gew.-% erste anorganische Partikel, die eine Größe von weniger als 0,1 mm aufweisen und ein Material umfassen, das aus der Gruppe bestehend aus: Siliciumdioxid, Silikat ausgewählt ist; von 10 Gew.-% bis 30 Gew.-% eine Polymermatrix; von 30 Gew.-% bis 75 Gew.-% zweite anorganische Partikel, die eine Größe von 0,1 mm bis 2 mm aufweisen und Siliciumdioxid umfassen; und von 3,25 Gew.-% bis 42 Gew.-% dritte anorganische Partikel, die eine kugelige Form und eine Größe von weniger als 0,3 mm aufweisen und Siliciumdioxid umfassen, wobei die kugelige Form, wie in der Beschreibung offenbart, definiert ist; wobei die zweiten und dritten anorganischen Partikel zumindest teilweise an die Polymermatrix mittels kovalenter Bindungen gebunden sind; wobei die Summe der Gewichte der ersten und dritten Partikel von 5,25 Gew.-% bis 52 Gew.-% der Zusammensetzung beträgt; wobei die Summe der Gewichte der ersten, zweiten und dritten Partikel von 65 Gew.-% bis 85 Gew.-% des Verbundmaterials beträgt; wobei über 0,05 mm die Größe der anorganischen Partikel den Durchmesser solcher Partikel bedeutet und der Durchmesser durch aufeinanderfolgendes Sieben mit abnehmenden Sieblochgrößen bis hinunter zu 0,05 mm erhalten wird; wobei unter 0,05 mm die Größe der anorganischen Partikel den mittleren Durchmesser solcher Partikel bedeutet und gemäß DIN 50049 / EN 10204 durch Messen der spezifischen Oberfläche BET, wie in der Beschreibung erläutert, erhalten wird; wobei die ersten Partikel keine kugelige Form aufweisen; wobei die dritten anorganischen Partikel eine Größe von mindestens 0,01 mm aufweisen und mindestens ein Drittel der dritten anorganischen Partikel eine Größe von weniger als 0,05 mm aufweist; wobei die dritten anorganischen Partikel aus Glas hergestellt sind; und wobei die zweiten Partikel aus einem silikatischen Material hergestellt sind, das aus der Gruppe bestehend aus: Quarz, Quarzglas, gemahlenem Glas ausgewählt ist.

17. Verbundmaterial nach Anspruch 16, umfassend mindestens 5 Gew.-% der ersten anorganischen Partikel und mindestens 43 Gew.-% der zweiten anorganischen Partikel.

18. Verbundmaterial nach Anspruch 16 oder 17, wobei die ersten anorganischen Partikel Siliciumdioxid umfassen und zumindest teilweise an die Polymermatrix mittels kovalenter Bindungen gebunden sind; und wobei die Polymermatrix ein Acrylpolymer umfasst.

**19.** Verbundmaterial nach einem der Ansprüche 16 bis 18,

wobei die Polymermatrix aus einem Acrylpolymer besteht; und
wobei die ersten Partikel aus einem Material hergestellt sind, das aus der Gruppe bestehend aus: Cristobalit, Wollastonit ausgewählt ist.

**20.** Verbundmaterial nach einem der Ansprüche 16 bis 19,

wobei die ersten anorganischen Partikel eine Größe von mindestens 0,01 mm aufweisen;
wobei die Polymermatrix teilweise ein Methacrylat ist; und
wobei mindestens ein Drittel der dritten Partikel eine Größe von weniger als 0,05 mm aufweist.

**21.** Material nach einem der Ansprüche 16 bis 20, erhalten gemäß dem Verfahren nach einem der Ansprüche 1 bis 15.

**22.** Produkt, umfassend ein Material nach einem der Ansprüche 16 bis 21.


**Revendications**

**1.** Procédé de préparation d'un matériau composite, le procédé comprend :

une étape de mélange, pendant laquelle une composition est mélangée ; la composition comprenant de 2 % en poids à 10 % en poids de premières particules inorganiques, qui ont une taille inférieure à 0,1 mm et comprennent un matériau choisi dans le groupe constitué de : silice, silicate ; de 10 % en poids à 30 % en poids d'une résine organique ayant une viscosité de 40 cps à 600 cps ; de 30 % en poids à 75 % en poids de deuxièmes particules inorganiques, qui ont une taille de 0,1 mm à 2 mm et comprennent de la silice ; de 3,25 % en poids à 42 % en poids de troisièmes particules inorganiques, qui ont une forme sphéroidale et une taille inférieure à 0,3 mm, la forme sphéroidale étant définie telle que divulguée dans la description ; de 0,08 % en poids à 1 % en poids d'au moins un silane ayant au moins une fraction vinylique ; et de 1 % en poids à 6 % en poids d'au moins un agent de réticulation ; la somme des poids des premières et troisièmes particules représentant de 5,25% en poids à 52 % en poids de la composition ; la somme des poids des premières, deuxièmes et troisièmes particules représentant de 65 % en poids à 85 % en poids de la composition ;
une étape de polymérisation, au cours de laquelle la résine organique polymérise avec l'agent de réticulation pour former le matériau composite
au-delà de 0,05 mm, on entend par taille des particules inorganiques le diamètre de ces particules, diamètre obtenu par tamisage successif avec des tailles de trous de tamis décroissantes jusqu'à 0,05 mm ; en dessous de 0,05 mm, on entend par taille des particules inorganiques le diamètre moyen de telles particules, obtenu conformément à la norme DIN 50049/EN 10204 par mesure de la surface spécifique BET comme exposé dans la description ; les mesures de viscosité sont effectuées avec un rhéomètre à débit contrôlé comme exposé dans la description ;
les premières particules n'ont pas une forme sphéroïdale ; les troisièmes particules inorganiques ont une taille d'au moins 0,01 mm ; au moins un tiers des troisièmes particules inorganiques ont une taille inférieure à 0,05 mm ; les troisièmes particules inorganiques sont en verre ; les deuxièmes particules sont constituées d'un matériau siliceux choisi dans le groupe constitué par : le quartz, la silice fondue, le verre broyé.

**2.** Procédé selon la revendication 1, dans lequel la composition comprend au moins 5 % en poids des premières particules inorganiques et au moins 43 % en poids des secondes particules inorganiques.

**3.** Procédé selon la revendication 1 ou 2, dans lequel des portions de particules inorganiques sont combinées avec la résine organique à des moments ultérieurs ; des aliquotes du silane étant combinées avec la résine organique à des moments ultérieurs correspondant aux portions de particules ; chaque aliquote de silane silanisant au moins partiellement la portion correspondante de particules.

**4.** Procédé selon l'une des revendications précédentes, dans lequel un premier mélange, qui comprend les premières particules, la résine organique et de 0,06 % en poids à 0,15 % en poids, par rapport au poids total du premier mélange, de silane, est préparé par mélange ; ensuite, le premier mélange, le silane supplémentaire, les deuxième et troisième particules sont combinés ensemble de manière à obtenir ladite composition.

**5.** Procédé selon l'une des revendications précédentes, dans lequel l'agent de réticulation a au moins deux résidus acryliques ; le silane a au moins un résidu acrylique.

**6.** Procédé selon l'une des revendications précédentes, dans lequel l'agent de réticulation comprend au moins un agent de réticulation avec deux fonctions vinyliques, en particulier deux résidus acryliques, et un agent de réticulation avec trois fonctions vinyliques, en particulier deux résidus acryliques ; la composition comprenant de 0,5 % en poids à 3 % en poids de l'agent de réticulation avec deux fonctions vinyliques ; et au moins 0,5 % en poids à 3 % en poids de l'agent de réticulation avec trois fonctions vinyliques ;
le silane est un acryloxy trialcoxy silane ayant, en particulier, la structure suivante :

$$A\text{-}Si\text{-}(OR)_3$$

dans laquelle A représente un résidu acrylique et chaque R représente indépendamment un alkyle, en particulier un alkyle en $C_1$-$C_3$.

**7.** Procédé selon l'une des revendications précédentes, dans lequel la résine organique est une résine méthacrylique.

**8.** Procédé selon l'une des revendications précédentes, dans lequel la résine organique est constituée d'au moins un monomère organique polymérisable et d'au moins un polymère organique ; la composition comprenant de 7 % en poids à 37 % en poids du monomère organique polymérisable et de 2 % en poids à 10 % en poids du polymère organique.

**9.** Procédé selon la revendication 8, dans lequel le monomère organique polymérisable comprend au moins un monomère acrylique ; le polymère organique comprend au moins un polymère acrylique.

**10.** Procédé selon la revendication 9, dans lequel le monomère organique polymérisable est un monomère méthacrylique ; le polymère organique est un polymère méthacrylique ; l'agent de réticulation a au moins deux groupes méthacryliques ; le silane a au moins un groupe méthacrylique.

**11.** Procédé selon la revendication 10, dans lequel le monomère organique polymérisable est le méthacrylate de méthyle ; le polymère organique est le polyméthacrylate de méthyle ; l'agent de réticulation est choisi dans le groupe constitué de : méthacrylate d'éthylène glycol (EGDM), diméthacrylate de triéthylène glycol (TEGDM), triméthacrylate de triméthylolpropane (TMPTM) et leurs mélanges ; le silane est un 3-méthacryloxytriméthoxy silane.

**12.** Procédé selon l'une des revendications précédentes, dans lequel la composition comprend un catalyseur de silanisation qui, en particulier, fait partie du premier mélange ; l'étape de polymérisation prévoit qu'un initiateur de polymérisation est ajouté à la composition.

**13.** Procédé selon l'une des revendications précédentes, dans lequel les premières particules inorganiques sont constituées d'un matériau choisi dans le groupe constitué de : la cristobalite, la wollastonite.

**14.** Procédé selon l'une des revendications précédentes, dans lequel les premières particules inorganiques comprennent de la silice.

**15.** Procédé selon l'une des revendications précédentes, dans lequel les première et troisième particules inorganiques ont une taille d'au moins 0,01 mm ; au moins un tiers des troisièmes particules ont une taille inférieure à 0,05 mm.

**16.** Matériau composite comprenant de 2 % en poids à 10 % en poids de premières particules inorganiques, qui ont une taille inférieure à 0,1 mm et comprennent un matériau choisi dans le groupe constitué de : silice, silicate ; de 10 % en poids à 30 % en poids d'une matrice polymère ; de 30 % en poids à 75 % en poids de secondes particules inorganiques, qui ont une taille de 0,1 mm à 2 mm et comprennent de la silice ; et de 3,25 % en poids à 42 % en poids de troisièmes particules inorganiques, qui ont une forme sphéroïdale et une taille inférieure à 0,3 mm et comprennent de la silice, la forme sphéroidale étant définie telle que divulguée dans la description ; les deuxième et troisième particules inorganiques étant au moins partiellement liées à la matrice polymère au moyen de liaisons covalentes ; la somme des poids des première, deuxième et troisième particules représentant de 65 % en poids à 85 % en poids du matériau composite ; au-delà de 0,05 mm, on entend par taille des particules inorganiques le diamètre de ces particules, diamètre obtenu par tamisage successif avec des tailles de trous de tamis décroissantes jusqu'à 0,05 mm ; en dessous de 0,05 mm, on entend par taille des particules inorganiques le diamètre moyen de telles particules, obtenu conformément à la norme DIN 50049/EN 10204 par mesure de la surface spécifique BET comme exposé dans la description ;

les premières particules n'ont pas une forme sphéroïdale ;
les troisièmes particules inorganiques ont une taille d'au moins 0,01 mm ; au moins un tiers des troisièmes particules inorganiques ont une taille inférieure à 0,05 mm ;
les troisièmes particules inorganiques sont en verre ;
les deuxièmes particules sont constituées d'un matériau siliceux choisi dans le groupe constitué par : le quartz, la silice fondue, le verre broyé.

17. Matériau composite selon la revendication 16, et comprenant au moins 5 % en poids des premières particules inorganiques et au moins 43 % en poids des secondes particules inorganiques.

18. Matériau composite selon la revendication 16 ou 17, dans lequel les premières particules inorganiques comprennent de la silice et sont au moins partiellement liées à la matrice polymère au moyen de liaisons covalentes ; la matrice polymère comprenant un polymère acrylique.

19. Matériau composite selon l'une des revendications 16 à 18, dans lequel la matrice polymère est constituée d'un polymère acrylique ; les premières particules sont constituées d'un matériau choisi dans le groupe constitué de : la cristobalite, la wollastonite.

20. Matériau composite selon l'une des revendications 16 à 19, dans lequel les première et troisième particules inorganiques ont une taille d'au moins 0,01 mm ; la matrice polymère étant partiellement méthacrylique ; au moins un tiers des troisièmes particules ayant une taille inférieure à 0,05 mm.

21. Matériau selon l'une des revendications 16 à 20, obtenu selon le procédé de l'une des revendications 1 à 15.

22. Produit comprenant un matériau selon l'une des revendications 16 à 21.

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1114716 B1

- GB 1493393 A

**Non-patent literature cited in the description**

- **SONG-YUAN CHANG ; LEI LIU ; SANFORD A. ASHER.** *J. Am. Chem. Soc,* 1994, vol. 116, 6745-6747

- **ZHIJIAN WU et al.** *Journal of Colloid and Interface Science,* 2006, vol. 304, 119-124